# EUROPÄISCHE PATENTSCHRIFT

(11) **EP 2 720 849 B1**
(45) Veröffentlichungstag und Bekanntmachung des Hinweises auf die Patenterteilung: **12.08.2015**
(21) Anmeldenummer: 12731323.7
(22) Anmeldetag: 05.06.2012
(51) Int. Cl.: B29C 65/02, B65D 35/02, B29D 23/20

(54) **VERFAHREN ZUM HERSTELLEN VON ROHRKÖRPERN FÜR VERPACKUNGSTUBEN SOWIE VERPACKUNGSTUBE**
METHOD FOR PRODUCING TUBULAR BODIES FOR PACKAGING TUBES, AND A PACKAGING TUBE
PROCEDE DE FABRICATION DE CORPS TUBULAIRES POUR TUBES D'EMBALLAGE ET TUBE D'EMBALLAGE

(30) Priorität: 16.06.2011 DE 102011051110
(43) Veröffentlichungstag der Anmeldung: 23.04.2014
(73) Patentinhaber: PackSys Global (Switzerland) Ltd., 8630 Rüti (CH)
(72) Erfinder: LÄUBLI, Julius, 8640 Rapperswil (CH)
(74) Vertreter: Wagner, Kilian
(86) Internationale Anmeldenummer: PCT/EP2012/060571
(87) Internationale Veröffentlichungsnummer: WO 2012/171828

(56) Entgegenhaltungen:
- GB-A- 2 156 268
- JP-A- 8 324 600

## Beschreibung

Die Erfindung betrifft ein Verfahren zum Herstellen von einer Innenumfangsfläche sowie einer Außenumfangsfläche aufweisenden Rohrkörpern für Verpackungstuben aus einem bandförmigen Foliensubstrat gemäß Anspruch 1 sowie eine Verpackungstube gemäß dem Oberbegriff des Anspruchs 10, umfassend einen, vorzugsweise nach einem erfindungsgemäßen Verfahren hergestellten Rohrkörper sowie einen fest mit dem Rohrkörper verbundenen Tubenkopf.

Aus der GB 2 156 268 A zeigt eine Verpackungstube mit einem eine Außenumfangsfläche und einer Innenumfangsfläche aufweisenden Rohrkörper, wobei ein Verbindungsbereich geschmolzenes und wiedererstarrtes Kunststoffmaterial des eingesetzten Laminates umfasst. Zur Ausbildung der Rohrform überlappen sich die Längsrandseiten des Laminates in Umfangsrichtung, d.h. die Längsränder sind nicht einander gegenüberliegend angeordnet.

Aus der JP 8 324600 A ist ein Verfahren zum Herstellen eines Tubenrohrkörpers bekannt, wobei zwischen Randseiten eines eingesetzten Foliensubstrates eine sogenannte Butt-Weld-Verbindung hergestellt wird, bei der die Randseiten in dem Bereich, in dem sie einander gegenüberliegen vollflächig aneinander angrenzen.

Aus der WO 2007/113781 ist ein Rohrkörper für Verpackungstuben bekannt. Der Rohrkörper der bekannten Verpackungstube wird hergestellt, indem zwei im rechten Winkel zur Außenumfangsfläche orientierte Randseiten bündig aneinander angelegt und dann auf der Außenumfangsfläche ein von dem den Rohrkörper bildenden Foliensubstrat separater Siegelstreifen vorgesehen wird, mit welchem das Foliensubstrat zu der vorerwähnten Rohrform fixiert (geschweißt) wird. Nachteilig bei der bekannten Verpackungstube ist, dass zum Verschweißen des Foliensubstrats bzw. zum Herstellen des Rohrkörpers ein zusätzliches Material in Form eines Siegelstreifens verwendet werden muss, der noch dazu optisch aufträgt. Alternativ zur Anordnung des Siegelstreifens auf der Außenumfangsfläche beschreibt die vorgenannte Druckschrift das Vorsehen des Siegelstreifens auf der Innenseite mit der Gefahr einer Spaltbildung im eigentlichen Foliensubstrat. Zudem ist die Herstellung aufgrund der Verwendung eines separaten Siegelstreifens vergleichsweise aufwändig und materialintensiv.

Aus der CH 686,665 A5 ist ein Verfahren zum Herstellen eines Rohrkörpers für eine Verpackungstube bekannt, bei welchem nicht abgeschrägte Randseiten des Foliensubstrats aneinander angelegt und dann das Foliensubstrat miteinander verschweißt wird. Im Gegensatz zu dem vorerwähnten Stand der Technik kommt das beschriebene Verfahren ohne separaten Siegelstreifen aus. Nachteilig bei der bekannten Verpackungstube ist die vergleichsweise kleine Kontaktfläche der beiden Randseiten und die Tatsache, dass ein Verschweißen nur in einem radial inneren Bereich und in einem davon radial beabstandeten äußeren Bereich stattfindet.

Aus der DE 41 21 427 C2 ist ein alternatives Verfahren zum Herstellen eines Rohrkörpers bekannt. Dort ist in Fig. 8 ein Ausführungsbeispiel gezeigt, bei welchem die einander gegenüberliegenden, sich in Längsrichtung erstreckenden Randseiten eines bandförmigen Foliensubstrates nicht rechtwinklig zur Außenumfangsfläche verlaufen, sondern abgeschrägt ausgebildet sind, wobei die Randseiten derart aneinandergelegt werden, dass die Randseiten radial außen bündig abschießen, d.h. zwei benachbarte Außenumfangsflächenabschnitte gehen vor dem Verschweißen in Umfangsrichtung stufenlos ineinander über bzw. liegen auf demselben Radius. In diesem Zustand werden die Randseiten dann durch gesandwichte Aufnahme zwischen zwei Schweißbändern miteinander verschweißt. Auf diese Weise hergestellte Rohrkörper haben sich bewährt. Insbesondere ist positiv hervorzuheben, dass das bekannte Verfahren ohne zusätzliche Siegelstreifen auskommt. Auch sind die Kontaktflächen vergleichsweise groß. Es bestehen jedoch Bestrebungen die Verbindung, insbesondere die Schweißnaht zwischen den Randseiten weiter zu verbessern, insbesondere im Hinblick auf die Robustheit und im Hinblick auf eine noch geringere Durchlässigkeit für Feuchtigkeit und/oder Sauerstoff. Bevorzugt sollen Fehlverschweißungen der Randseiten vermieden werden, um somit ein unerwünschtes Aufplatzen oder selbsttätiges Öffnen einer Verpackungstube im Bereich der Schweißnaht sicher zu verhindern.

Aus der JP 08 001 838 A ist eine Tube bekannt, bei der die erste und die zweite Randseite zu einer jeweiligen Dickenerstreckungsrichtung des Foliensubstrates an einer radial innersten bzw. radial äußersten Kante den gleichen Winkel einschließen. Eine solche Ausführung ist auch in der JP 08 091 397 A gezeigt.

Ausgehend von dem vorgenannten Stand der Technik liegt der Erfindung die Aufgabe zugrunde, ein verbessertes Verfahren zum Herstellen von Rohrkörpern für Verpackungstuben anzugeben, welches ohne zusätzliches Siegelband auskommt und zudem eine bessere (robustere bzw. sichere) Verbindung zwischen den Randseiten des Rohrkörpers sicherstellt. Ferner besteht die Aufgabe darin, eine entsprechend verbesserte, insbesondere robustere Verpackungstube anzugeben.

Diese Aufgabe wird hinsichtlich des Verfahrens mit den Merkmalen des Anspruchs 1 und hinsichtlich der Verpackungstube mit den Merkmalen des Anspruchs 10 gelöst. Vorteilhafte Weiterbildungen der Erfindung sind in den Unteransprüchen angegeben. In den Rahmen der Erfindung fallen sämtliche Kombinationen aus zumindest zwei von in der Beschreibung, den Ansprüchen und/oder den Figuren offenbarten Merkmalen.

Zur Vermeidung von Wiederholungen sollen vorrichtungsgemäß offenbarte Merkmale auch als verfahrensgemäß offenbart gelten und beanspruchbar sein. Ebenso sollen verfahrensgemäß offenbarte Merkmale als vorrichtungsgemäß offenbart gelten und beanspruchbar sein.

Der Erfindung liegt der Gedanke zugrunde, die winklig zur Außenumfangsfläche verlaufenden Randseiten des Foliensubstrates nicht wie im Stand der Technik vollflächig aneinander anzulegen und dann zu verschweißen, sondern in den ersten Winkel von weniger als 90°, unter dem die erste Randseite zur ersten Dickenerstreckungsrichtung des Foliensubstrates läuft unterschiedlich groß, insbesondere kleiner, zu wählen als den zweiten Winkel von weniger als 90°, unter dem die gegenüberliegende zweite Randseite zu der zweiten Dickenerstreckungsrichtung des Foliensubstrates verläuft und zudem die winklig zu den Dickenerstreckungsrichtungen des Foliensubstrates verlaufenden Randseiten derart anzuordnen, dass die Randseiten einen nach außen offenen (äußeren), vorzugsweise in einer Schnittansicht im Wesentlichen dreieckförmig konturierten Längsspalt begrenzen, welcher bevorzugt während des Schweißverfahrens mit Kunststoffmaterial gefüllt wird, welches noch weiter bevorzugt nicht von einem von dem Foliensubstrat separaten Siegelstreifen herrührt, sondern von dem Foliensubstrat selbst. Anders ausgedrückt umfasst die Erfindung zwei Kernaspekte, nämlich zum ersten die Wahl unterschiedlicher Winkel zwischen den Randseiten und der jeweiligen Dickenerstreckungsrichtung des Foliensubstrates an definierten Umfangspositionen, wobei der erste Winkel zwischen etwa 3° und etwa 70° kleiner sein soll als der zweite Winkel und zum zweiten eine relative Anordnung der Randseiten zueinander derart, dass zwischen diesen ein nach außen offener Längsspalt begrenzt wird. Bevorzugt nimmt der Querschnitt dieses äußeren Längsspaltes von einem, bevorzugt in Richtung der Längserstreckung des Foliensubstrates betrachtet näherungsweise linienförmigen, (im Querschnitt im Wesentlichen punktförmigen bzw. kleinflächenförmigen) Kontaktbereich zwischen den Randseiten in radialer Richtung nach außen zu. Durch die vorgeschlagenen Maßnahmen wird erstmals gewährleistet, dass beim Verschweißen des Foliensubstrates zu einer Rohrform geschmolzenes Kunststoffschichtmaterial einen Bereich zwischen den Randseiten, zumindest näherungsweise vollständig ausfüllen kann, wodurch die materialschlüssige Verbindung der Randseiten im Vergleich zum Stand der Technik vermieden wird. Nicht verschweißte Bereiche im Inneren der Rohrkörperwand, wie diese im Stand der Technik auftreten, werden auf ein Minimum reduziert und bevorzugt durch das erfindungsgemäße Verfahren vollständig vermieden. Wie bereits angedeutet werden also die Randseiten, die sich bevorzugt geradlinig unter einem jeweiligen Winkel von der Außenumfangsfläche bis zur Innenumfangsfläche erstrecken nicht vollflächig, sondern lediglich in einem vergleichsweise geringen Kontaktbereich aneinander angelegt oder alternativ sogar etwas voneinander beabstandet, worauf in einem auf den Positionierschritt folgenden Schritt bei der Fertigung der Rohrkörper das Verschweißen des Foliensubstrates unter Wärmeeinwirkung erfolgt, beispielsweise indem der Schweißbereich, in welchem das Foliensubstrat mit sich selbst verschweißt werden soll, sandwichartig zwischen zwei sich zusammen mit dem Foliensubstrat bewegenden Schweißbändern aufgenommen und mit Wärmeenergie, beispielsweise über Hochfrequenzstrahlung beaufschlagt wird. Bei diesem Verschweißen wird der zunächst nach außen offene Längsspalt, zumindest teilweise, vorzugsweise vollständig mit Kunststoffmaterial aufgefüllt, wodurch eine vorzugsweise vollflächige, gute Verbindung zwischen den Randseiten hergestellt wird, da zunächst flüssiges Kunststoffschichtmaterial von außen in radialer Richtung weiter nach innen eindringen kann, als dies im Stand der Technik möglich ist. Gleichzeitig wird zwischen den Foliensubstraträndern durch das aufgeschmolzene und dann erstarrte Kunststoffmaterial ein sanfter, nicht kantiger, bevorzugt stufenloser Übergang in Umfangsrichtung ausgebildet, so dass die eigentliche Verbindungsstelle kaum sichtbar wird und das ästhetische Erscheinungsbild der späteren Verpackungstube nicht wesentlich beeinträchtigt.

Die erste Dickenerstreckungsrichtung befindet sich gemäß patentanspruchlicher Definition an einer Umfangsposition des Rohrkörpers, an welcher die erste radial innerste Kante der ersten Randseite angeordnet ist, also an einer Umfangsposition, bei welcher die erste Randseite auf die Innenumfangsfläche, genauer einen Innenumfangsflächenrandabschnitt trifft. Bei dem ersten Winkel handelt es sich also um den Winkel, der von der ersten Randseite und der sich senkrecht zu einer Tangente an der Außenumfangsfläche und einer dazu parallelen Tangente an der Innenumfangsfläche erstreckenden Dickenerstreckungsrichtung (Stärkenerstreckungsrichtung) aufgespannt wird. Die zweite Dickenerstreckungsrichtung ist in Umfangsrichtung unweit von der ersten Dickenerstreckungsrichtung entfernt und an derjenigen Umfangsposition des Rohrkörpers angeordnet, an welcher sich die zweite radial äußerste Kante der zweiten Randseite befindet, also an der Umfangsposition, an welcher die zweite Randseite auf die Außenumfangsfläche trifft. Der zweite Winkel wird zwischen dieser zweiten Dickenerstreckungsrichtung und der zweiten Randseite aufgespannt. Bevorzugt kann in einer ersten Näherung davon ausgegangen werden, dass die erste Dickenerstreckungsrichtung und die zweite Dickenerstreckungsrichtung nicht nur bei abgerolltem Foliensubstrat parallel zueinander verlaufen, sondern auch bei zu einem Rohrkörper verformtem Foliensubstrat, da die Foliensubstratdicke sowie der Abstand zwischen der ersten Dickenerstreckungsrichtung und der zweiten Dickenerstreckungsrichtung im Vergleich zum Radius bzw. zum Durchmesser des Rohrkörpers vernachlässigbar klein sind. Bevorzugt ist die Dickenerstreckung (Folienstärke) des Foliensubstrates aus einem Wertebereich zwischen 100µm und 500µm, vorzugsweise zwischen 150µm und 400µm gewählt. Bevorzugt sind die erste Dickenerstreckungsrichtung und die zweite Dickenerstreckungsrichtung um eine Strecke aus einem Wertebereich zwischen 0,01 mm und 1,50mm, vorzugsweise zwischen 0,05mm und 1,00mm in Umfangsrichtung voneinander beabstandet. Bevorzugt ist der Durchmesser des Rohrkörpers aus einem Durchmesserbereich zwischen 10mm und 70mm, vorzugsweise zwischen 12,7mm und 60mm, gewählt.

Durch das Vorsehen des später mit Kunststoffmaterial gefüllten äußeren Längsspaltes ist es möglich, ohne die zusätzliche Verwendung eines Siegelbandes nicht nur in Bezug auf eine Dickenmittenebene des Foliensubstrates symmetrisch aufgebaute Foliensubstrate, sondern auch asymmetrisch aufgebaute, insbesondere mehrschichtige Foliensubstrate zu einem Rohrkörper für Verpackungstuben zu verarbeiten.

Das erfindungsgemäße Verfahren eignet sich zum Verschweißen eines Foliensubstrates zu einer Rohrform, dass mindestens eine verschweißbare Kunststoffschicht aufweist oder aus dieser besteht. Hierbei kann es sich beispielsweise um einen thermoplastischen Kunststoff, insbesondere Polyethylen, Polypropylen oder ein Co-Polymer der vorgenannten Verbindungen handeln. Bevorzugt ist die mindestens eine verschweißbare Kunststoffschicht gepaart mit mindestens einer Barriereschicht gegen Feuchtigkeit und/oder Gasdurchtritt, beispielsweise eine Aluminiumfolie oder eine Aluminiumschicht, beispielsweise Bedampfung.

Bevorzugt erfolgt das Umformen des bandförmigen Foliensubstrates zu dem Rohrkörper bzw. der Rohrform in an sich bekannter Weise, beispielsweise über mindestens ein das Formband das über konkav konturierte Walzen angetrieben ist, wie dies beispielsweise in der CH 686,665 A5 beschrieben ist. Das Ablängen des hergestellten Rohres zum Rohrkörper erfolgt bevorzugt nach dem Aushärten der Schweißnaht. Das Schneiden der Randseiten des Foliensubstrates unter den unterschiedlichen Winkeln, kann inline vor dem Umformen zur Rohrform mit Hilfe entsprechend abgewinkelter randseitig angeordneter Messer erfolgen oder in einem vorgelagerten Schneidschritt.

Insgesamt wird durch das erfindungsgemäße Verfahren eine wesentlich robustere Verpackungstube erhalten, die im Hinblick auf eine Feuchtigkeit- und/oder Gasdurchlässigkeit dichter ist, da nicht verschweißte Kontaktbereiche zwischen den Randseiten auf ein Minimum reduziert, bevorzugt vollständig vermieden werden.

Als besonders zweckmäßig hat es sich herausgestellt, wenn der erste Winkel aus einem Winkelbereich zwischen 1° und 77°, vorzugsweise zwischen 5° und 70°, noch weiter bevorzugt zwischen 10° und 60° gewählt ist und/oder der zweite Winkel aus einem Winkelbereich zwischen 4° und 80°, vorzugsweise zwischen 5° und 70°, noch weiter bevorzugt zwischen 10° und 60°.

Idealerweise beträgt die Winkeldifferenz (entspricht dem Öffnungswinkel des Längsspaltes, den die Randseiten einschließen) zwischen dem ersten und dem zweiten Winkel zwischen 3° und 30°, noch weiter bevorzugt zwischen 3° und 7°. Dabei ist der erste Winkel bevorzugt um die vorgenannte Winkeldifferenz kleiner als der zweite Winkel.

Wie eingangs erwähnt, ist es zur Herstellen einer sicheren bzw. robusten Schweißverbindung bevorzugt, wenn der äußere Längsspalt zwischen den beiden Seiten, zumindest teilweise mit Kunststoffmaterial der Kunststoffschicht aufgefüllt wird. Bevorzugt ausschließlich mit Kunststoffmaterial des Foliensubstrates, d.h. ohne zusätzliches Kunststoffmaterial, was beispielsweise von einem separaten Siegelstreifen herrühren würde.

Besonders zweckmäßig ist es, wenn die unterschiedlichen Winkel zur jeweiligen Dickenerstreckungsrichtung verlaufenden, vorzugsweise in einer Schnittansicht geradlinig konturierten Randseiten in radialer Richtung höhenversetzt angeordnet sind, dass also die in Richtung der Dickenerstreckung gemessenen Dickenmitten der gegenüberliegenden Randseiten in radialer Richtung beabstandet sind, so dass die erste radial innerste (Längs-)Kante der ersten Randseite in radialer Richtung weiter außen liegt als eine zweite innerste (Längs-)Kante der zweiten Randseite (wobei auch eine Ausführungsform realisierbar ist, bei der die beiden Randseiten mit ihren vorerwähnten innersten Längskanten aneinander anliegen, dass also die beiden innersten Längskanten auf demselben Radius angeordnet sind, um somit den Längsspalt querschnittsflächenmäßig zu maximieren).

Bevorzugt bei einer Ausführungsvariante mit Dickenmittenversatz ist, wenn die zweite Randseite mit einem radial inneren Zipfel die Innenumfangsfläche des Foliensubstrates in Umfangsrichtung (ein Stück weit) überragt, vorzugsweise um eine in Umfangsrichtung gemessene Strecke aus einem Wertebereich zwischen 0,01mm und 1,50mm, vorzugsweise zwischen 0,05mm und 1,00mm. Dabei wird zwischen dem die Innenumfangsfläche des Foliensubstrates überragenden radial inneren Abschnitt, insbesondere Zipfel des Foliensubstrates, und der Innenumfangsfläche, genauer zwischen einem radial inneren Abschnitt (Strecke) der zweiten Randseite und der Innenumfangsfläche ein innerer Längsspalt, d.h. eine langgestreckte Nut bzw. Aufnahme gebildet, die mit Kunststoffmaterial des Foliensubstrates beim Verschweißen gefüllt werden kann. In Weiterbildung der Erfindung ist also mit Vorteil vorgesehen, dass aus einer in radialer Richtung betrachtet höhenversetzten Anordnung der abgeschrägten Randseiten eine Art nach radial innen überstehender Zipfel gebildet wird, der sich radial innerhalb der Innenumfangsfläche des Rohrkörpers befindet, so dass der vorerwähnte innere Längsspalt resultiert. Dieser innere Längsspalt wird bei dem auf den Positionierschritt folgenden Schweißschritt mit Kunststoffmaterial, insbesondere des vorerwähnten Zipfels gefüllt, so dass sich am Innenumfang ein sanfter, d.h. nicht kantiger bzw. stufenloser Übergang ausbildet der eine sichere Verbindung des Foliensubstrates zu dem Rohrkörper garantiert. Durch das Vorsehen von zwei Längsspalten, nämlich des erfindungswesentlichen äußeren Längsspaltes und des bevorzugt vorgesehenen inneren Längsspaltes wird eine besonders feuchtigkeits- und gasdichte Verbindung des Foliensubstrates mit sich selbst unter Fixierung bzw. dauerhafter Ausbildung des Rohrköpers geschaffen.

Die Erfindung führt auch auf eine Verpackungstube, umfassend einen, vorzugsweise nach einem nach dem Konzept der Erfindung ausgebildeten Verfahren hergestellten Rohrkörper, an welchem ein Tubenkopf in an sich bekannter Weise festgelegt ist.

Die erfindungsgemäße Verpackungstube zeichnet sich aus durch einen beim Schweißprozess entstandenen Verbindungsbereich aus geschmolzenem und wieder erstarrtem Kunststoffmaterial der mindestens einen Kunststoffschicht, welcher sich in radialer Richtung durchgängig von der Außenumfangsfläche bis zur Innenumfangsfläche des Rohrkörpers der Verpackungstube erstreckt, anders ausgedrückt sind die ehemaligen beiden einander gegenüberliegenden Randseiten über einen in radialer Richtung durchgehenden Verbindungsbereich, der teilweise aus dem Randseitenmaterial besteht fest miteinander verbunden. Diese Ausgestaltung der Verpackungstube wird möglich durch das erfindungsgemäße Verfahren, bei welchem ein sich nach außen öffnender (äußerer) Längsspalt beim Schweißschritt mit Kunststoffmaterial, welches vorzugsweise ausschließlich aus dem Foliensubstrat stammt gefüllt wird. Auf diese Weise kann Kunststoffschichtmaterial viel weiter nach radial innen durchdringen als dies im Stand der Technik der Fall ist, wodurch eine sehr robuste sowie in Bezug auf Feuchtigkeits- und/oder Gasdurchtrittdichte Verpackungstube erhalten wird.

Bevorzugt wird die radial innerste Kante der ersten Randseite unterhalb der Dickenmitte der zweiten Randseite angeordnet, um einen möglicht großflächigen äußeren Längsspalt zu erhalten.

In Weiterbildung der Erfindung ist mit Vorteil vorgesehen, dass sich die Umfangserstreckung des Verbindungsbereichs ausgehend von einem radial äußersten Bereich, d.h. von der Außenumfangsfläche im Schweißbereich in radialer Richtung nach innen bis zu einer (in Bezug auf den vorerwähnten radial äußersten Bereich) radial weiter innen gelegenen Radialposition abnimmt. Diese (innere) Radialposition kann gemäß einer ersten Ausführungsvariante eine radial innerste Position sein, nämlich dann, wenn die beiden Randseiten mit ihren innersten Längskanten aneinander angelegt werden. Es kann sich jedoch alternativ auch um eine von der radial innersten Position in radialer Richtung beabstandete Position zwischen der Außenumfangsfläche und der Innenumfangsfläche handeln, wenn die Randseiten dickenversetzt angeordnet werden, bevorzugt derart, dass vor dem Verschweißen die zweite Randseite die Innenumfangsfläche in Umfangsrichtung ein Stück weit überragt. Ganz besonders zweckmäßig ist es, wenn der Verbindungsbereich bei einer Schnittanalyse eine von der radial innen gelegenen Radialposition bis zum radial äußersten Bereich betrachtet zunehmende Umfangserstreckung aufweist. Bevorzugt ist der Verbindungsbereich zwischen der vorerwähnten weiter innen gelegenen Radialposition bis zur Außenumfangsfläche im Wesentlichen dreieckförmig konturiert.

Im Falle des Vorsehens eines inneren Längsspaltes zwischen der zweiten Randseite und der Innenumfangsfläche ist es bevorzugt, wenn vorzugsweise ausgehend von der vorerwähnten weiter innen liegenden Position bis zur Innenumfangsfläche die Umfangserstreckung des Verbindungsbereichs ebenfalls zunimmt, wobei dieser innere Verbindungsbereich bevorzugt auch im Querschnitt im Wesentlichen dreieckförmig konturiert ist.

Ganz besonders bevorzugt ist es, wenn ein erster (beim Schweißen bevorzugt nicht aufgeschmolzener, d.h. seine ursprüngliche Form aufweisender) Innenumfangsflächenabschnitt des Rohrkörpers in radialer Richtung beabstandet ist von einem zweiten (bevorzugt ebenfalls beim Schweißen nicht aufgeschmolzenen, d.h. seine ursprüngliche Form aufweisenden) Innenumfangsflächenabschnitt, wobei zwischen den beiden vorerwähnten, in radialer Richtung betrachtet höhenversetzten Innenumfangsflächenabschnitten ein innerer Übergangsabschnitt aus geschmolzenem Kunststoffschichtmaterial ausgebildet ist, mit dem ein (vorzugsweise schräger) stufenloser Übergang in Umfangsrichtung zwischen den Innenumfangsflächenabschnitten gebildet ist. Bevorzugt entsteht dieser (innere) Übergangsabschnitt durch Aufschmelzen eines inneren Überstandszipfels einer zweiten Randseite des Foliensubstrates, welcher vor dem Verschweißen einen an die erste Randseite angrenzenden Innenumfangsflächenrandabschnitt unter Ausbildung eines inneren Längsspaltes überragt hat.

Besonders zweckmäßig ist es, wenn das zur Anwendung kommende Foliensubstrat mehrschichtig ist und eine, vorzugsweise sandwichartig zwischen mindestens zwei (vorzugsweise verschweißbaren) Kunststoffschichten angeordnete, Barriereschicht gegen Feuchtigkeit und/oder Sauerstoff umfasst, und dass eine erste Barriereschichtrandseite (die Teil der ersten Randseite ist) und eine zweite Barriereschichtrandseite (die Teil der zweiten Randseite ist) vollständig von geschmolzenem und wieder erstarrtem Kunststoff des Verbindungsbereichs in radialer Richtung überdeckt sind.

Weitere Vorteile, Merkmale und Einzelheiten der Erfindung ergeben sich aus der nachfolgenden Beschreibung bevorzugter Ausführungsbeispiele sowie anhand der Zeichnungen.

Diese Zeichnungen zeigen in:
- Fig. 1: eine schematische Querschnittsansicht eines Rohrkörpers einer Verpackungstube mit einem übertrieben abgeflacht dargestellten Umfangsabschnitt, in welchem zwei Längsrandseiten des den Rohrkörper bildenden Foliensubstrates durch Verschweißen verbunden sind,
- Fig. 2a: einen Ausschnitt aus einem späteren (also vor dem Verschweißen) Verbindungsbereich eines zu einem Rohrkörper umgeformten Foliensubstrates, wobei das Foliensubstrat mit zwei abgeschrägten, höhenversetzt angeordneten Randseiten aneinander anliegt und wobei in dem gezeigten Ausführungsbeispiel ein dreischichtiges, symmetrisches Foliensubstratmaterial zur Anwendung kommt,
- Fig. 2b: einen Ausschnitt eines aus der Situation gemäß Fig. 2a durch Verschweißen hergestellten Verbindung des Foliensubstrates zu einem Rohrkörper,
- Fig. 3a: eine Situation während der Ausbildung eines Rohrkörpers aus einem Foliensubstrat, bei welchem die beiden Randseiten des Foliensubstrates in radialer Richtung nicht höhenversetzt sind, sondern sowohl in einem radial äußeren Bereich als auch in einem radial inneren Bereich jeweils auf demselben Radius angeordnet sind,
- Fig. 3b: einen Ausschnitt eines aus der Situation gemäß Fig. 3a hergestellten Rohrkörpers einer Verpackungstube und
- Fig. 4: eine Darstellung eines abgerollten Foliensubstrates zur genaueren Erläuterung der Lage des ersten und zweiten Winkels.

In den Figuren sind gleiche Elemente und Elemente mit der gleichen Funktion mit den gleichen Bezugszeichen gekennzeichnet.

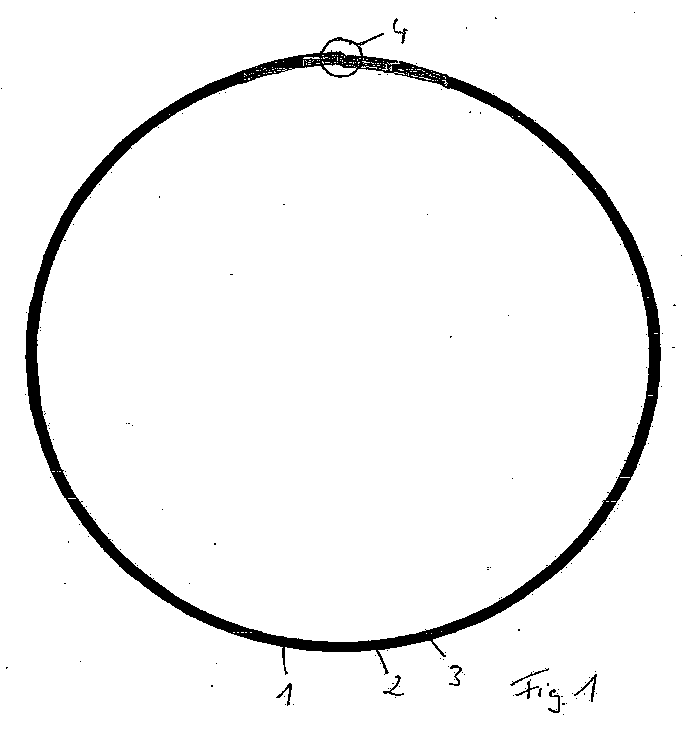

In Fig. 1 ist in einer Querschnittsansicht ein im Wesentlichen kreisrund konturierter Rohrkörper 1 für eine ansonsten nicht weiter dargestellte, an sich ansonsten bekannte Verpackungstube im Wesentlichen bestehend aus Kunststoff gezeigt. Der Rohrkörper 1 ist gebildet von einem ein- oder mehrschichtigen symmetrischen oder asymmetrischen Foliensubstrat 2, umfassend oder bestehend aus mindestens einer verschweißbaren Kunststoffschicht 3.

Zur Herstellung des Rohrkörpers wird das bandförmige Substrat 2 zu einer Zylinderform geformt, wobei in Fig. 1 nicht im Detail zu erkennende, abgeschreckte Randseiten aneinander angelegt werden und dann das Foliensubstrat zur Fixierung des Rohrkörpers 1 in dem eingekreisten Bereich 4 miteinander verschweißt wird, wobei mögliche detaillierte Ansichten bzw. Ausführungsvarianten des Bereichs 4 (vor und nach dem Verschweißen) in den folgenden Figuren noch weiter erläutert werden. Das Verschweißen erfolgt beispielsweise derart, dass der Bereich 4 sandwichartig zwischen zwei Schweißbändern aufgenommen wird, die dann, insbesondere mittels einer HF-Schweißeinrichtung erwärmt werden, was zur zumindest teilweisen Aufschmelzung des Foliensubstrates im Bereich 4 führt. Auf die Verschweißstation folgt bevorzugt in an sich bekannter Weise eine Kühlstrecke zur Ausbildung (d.h. Aushärtung) der Schweißnaht.

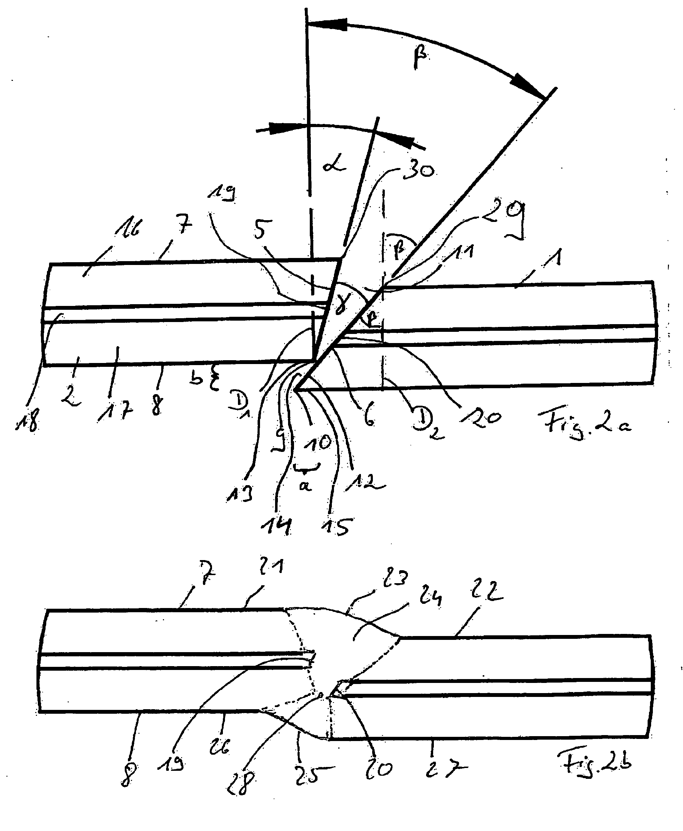

In Fig. 2a ist eine mögliche Situation vor dem Verschweißschritt gezeigt. Das Foliensubstrat 2, welches in dem gezeigten Ausführungsbeispiel dreischichtig ausgeführt ist, wurde beispielsweise mit Hilfe eines Formbandes und/oder konkaver Rollen zu einem Rohrkörper verformt, derart, dass eine in eine Umfangsrichtung orientierte erste Randseite 5 des Foliensubstrates 2 abschnittsweise, d.h. lediglich partiell bzw. nicht vollflächig an einer gegenüberliegenden zweiten, in eine der ersten Umfangsrichtung entgegengesetzte Umfangsrichtung orientierten zweiten, Randseite 6 des Foliensubstrates 2 anliegt.

Wie aus Fig. 2a zu entnehmen ist, ist die erste Randseite 5, ebenso wie die zweite Randseite 6 in der gezeigten Querschnittsansicht geradlinig konturiert, erstreckt sich also geradlinig von einer Außenumfangsfläche 7 des Rohrkörpers 1 bis zur Innenumfangsfläche 8. Dabei ist die erste Randseite unter einem ersten Winkel α zu einer Dickenerstreckungsrichtung D₁ des Foliensubstrates angeordnet, wobei dieser Winkel α kleiner ist als ein zweiter Winkel β den die gegenüberliegende, zweite Randseite mit einer zweiten Dickenerstreckungsrichtung D₂ des Foliensubstrates 2 einschließt. Die erste Dickenerstreckungsrichtung D₁ befindet sich an einer (ersten) Umfangsposition des Rohrkörpers, an welcher sich eine erste radial innerste Kante 9 der ersten Randseite befindet. Die zweite Dickenerstreckungsrichtung D₂ befindet sich an einer zu der ersten radial innersten Kante 9 in Umfangsrichtung versetzten zweiten radial äußersten Kante 29 der zweiten Randseite, also an einer von der ersten Umfangsposition beabstandeten zweiten Umfangsposition. Bei der Darstellung wird ein möglicher (geringer) Winkel zwischen den beiden Dickenerstreckungsrichtungen D₁ und D₂ vernachlässigt, d.h. es wird davon ausgegangen, dass die beiden Dickenerstreckungsrichtungen (Dickenerstreckungslinien) parallel verlaufen.

Bei dem Ausführungsbeispiel gemäß Fig. 2a sind die Randseiten 5, 6 in radialer Richtung höhenversetzt, derart, dass die nicht separat eingezeichneten Dickenmitten der Randseiten 5, 6 in radialer Richtung beabstandet sind, derart, dass die Dickenmitte der ersten Randseite 5 radial weiter außen liegt als die Dickenmitte der zweiten Randseite 6. Dies wird dadurch erreicht, dass die erste radial innerste Kante 9 der ersten Randseite, also die Umfangsposition, an der die Randseite 5 auf die Innenumfangsfläche 8 trifft (ebenso die erste Dickenerstreckungslinie D₁) radial weiter außen angeordnet wird als eine zweite radial innerste Kante 10 der zweiten Randseite 6. Folglich befindet sich die zweite radial äußerste Kante 29 radial weiter in Richtung Mittelpunkt des Rohrköpers versetzt, als eine erste radial äußerste Kante 30.

Aus Fig. 2a ergibt sich, dass die erste Randseite 5 und die zweite Randseite 6 radial außerhalb der ersten innersten Kante 9 einen nach außen offenen Längsspalt 11 begrenzen, dessen Erstreckung in Umfangsrichtung mit zunehmendem Abstand zum querschnittlichen Rohrkörpermittelpunkt (d.h. in radialer Richtung nach außen betrachtet) zunimmt. Die beiden Randseiten 5, 6 schließen einen Öffnungswinkel γ ein. In dem gezeigten Ausführungsbeispiel beträgt der erste Winkel α = 15°, der zweite Winkel β = 30° und der Öffnungswinkel γ = 15°. Der Öffnungswinkel entspricht dem Differenzwinkel aus dem zweiten Winkel β und dem ersten Winkel α, wobei dieser Differenzwinkel gemäß einer besonders bevorzugten (nicht gezeigten) Ausführungsform zwischen 3° und 7° beträgt.

Bei dem gezeigten Ausführungsbeispiel liegt die radial innerste Kante 9 der ersten Randseite 5 in radialer Richtung betrachtet unterhalb der Dickenmitte der zweiten Randseite 6 an der zweiten Randseite 6 an, was generell bevorzugt ist.

Wie erwähnt, befinden sich die Dickenmitten der Randseiten 5, 6 nicht auf demselben Radius. Dies führt dazu, dass die zweite Randseite 6 mit einem radial inneren Bereich 12 die Innenumfangsfläche 8 des Rohrkörpers 1 in eine zweite Umfangsrichtung, hier in der Zeichnungsebene nach links überragt, und zwar um eine in Umfangsrichtung gemessene Strecke a von dem gezeigten Ausführungsbeispiel 75mm. Anders ausgedrückt überragt ein radial innerer Zipfel, dessen radial innere Spitze von der innersten Kante 10 gebildet ist die Innenumfangsfläche 8, genauer einen ersten, an die erste Randseite 5 angrenzenden Innenumfangsrandabschnitt 13 in der Zeichnungsebene nach links, d.h. in eine zweite Umfangsrichtung. Hierdurch wird zwischen der zweiten Randseite 6 und dem Innenumfangsflächenrandabschnitt 13 ein innerer Längsspalt 14 mit einer im Wesentlichen dreieckförmigen Querschnittskontur gebildet.

Aus dem Dickenmittenversatz der Randseiten resultiert neben dem inneren Längsspalt 14 die Tatsache, dass der erste Innenumfangsflächenrandabschnitt 13, der an die erste Randseite 5 angrenzt, um das Maß b von 130mm radial weiter außen angeordnet ist als ein zweiter Innenumfangsflächenrandabschnitt 15, der an die zweite Randseite 6 angrenzt. Dabei entspricht dem Maß b dem Dickenmittenversatz der Randseiten.

Die beiden Längsspalte 11, 14 werden bei dem auf den Positionierschritt folgenden Schweißprozess verschlossen bzw. zumindest teilweise aufgefüllt von Kunststoffmaterial des Foliensubstrates 2, bevorzugt derart, dass, wie später noch anhand von Fig. 2b erläutert werden wird aufgeschmolzenes und wieder erstarrtes Kunststoffmaterial sich in radialer Richtung durchgängig fortsetzt von dem Außenumfangsrohrkörper bis zum Innenumfang.

In dem gezeigten Ausführungsbeispiel ist das Foliensubstrat 2 symmetrisch ausgebildet (was jedoch nicht zwingend der Fall sein muss). Wie erwähnt handelt es sich um eine dreischichtige Folie, die neben einer äußeren, hier äußersten, verschweißbaren Kunststoffschicht 16 eine innere, hier innerste, verschweißbare Kunststoffschicht 17 aufweist, wobei die beiden Kunststoffschichten 16, 17 in dem gezeigten Ausführungsbeispiel die gleiche Dicke aufweisen (was nicht zwingend der Fall sein muss) und eine Barriereschicht 18, beispielsweise eine Aluminiumschicht sandwichsartig zwischen sich aufnehmen.

Wie sich aus Fig. 2a weiter ergibt, sind eine erste Barriereschichtrandseite 19 und eine zweite Barriereschichtrandseite 20 in radialer Richtung voneinander beabstandet angeordnet, wobei auch bei alternativen Ausführungsvarianten eine teilweise Überlappung in radialer Richtung realisierbar ist oder eine vollständige Überlappung; letztere Variante dann, wenn die Randseiten 5, 6 derart angeordnet werden, dass die erste radial innerste Kante 9 (zumindest näherungsweise) an die zweite radial innerste Kante 10 angrenzt bzw. an dieser anliegt. Die Barriereschichtrandseiten 19, 20 bilden ein Teil der jeweiligen Randseite 5, 6 und verlaufen daher unter dem ersten bzw. zweiten Winkel α, β zu der jeweiligen Dickenerstreckungsrichtung D₁ bzw. D₂.

In Fig. 2b ist ein Ausschnitt eines fertigen, d.h. verschweißten Rohrkörpers 1 gezeigt. Zu erkennen ist in der Darstellung ein Mittenhöhenversatz (Radialversatz) zwischen einem ersten (beim Verschweißen nicht verformten) Außenumfangsabschnitt 21 und einem in Umfangsrichtung beabstandeten zweiten Außenumfangsflächenabschnitt 22. Die beiden auf unterschiedlichen Radien liegenden Außenumfangsflächenabschnitte 21, 22 sind über einen äußeren Übergangsabschnitt 23 verbunden, der beim Verschweißen der in Fig. 2a gezeigten Situation entsteht. Dieser äußere Übergangsabschnitt 23 verbindet stufenlos, d.h. fließend die beiden radial versetzten Außenumfangsflächenabschnitte 21, 22 und bildet die Außenumfangsfläche bzw. ein Außenumfangsflächenabschnitt eines Verbindungsbereichs 24 aus beim Schweißprozess geschmolzenem und wieder erstarrtem Material des Foliensubstrates 2, in dem gezeigten Ausführungsbeispiel der beiden Kunststoffschichten 16, 17.

Im Bereich seines Innenumfangs ist ein innerer Übergangsabschnitt 25 gebildet zwischen einem ersten und einem zweiten (wie die Außenumfangsabschnitte beim Verschweißen nicht verformten) Innenumfangsflächenabschnitt 26, 27, die in radialer Richtung um den Mittenversatz beabstandet sind.

Wie sich aus Fig. 2b ergibt erstreckt sich der Verbindungsbereich 24 aus beim Verschweißen aufgeschmolzenem und wieder erstarrtem Kunststoffschichtmaterial in radialer Richtung von der Außenumfangsfläche 7, genauer von dem äußeren Übergangsabschnitt 23 bis zur Innenumfangsfläche 8, noch genauer bis zum inneren Übergangsabschnitt 25 und überzieht dabei die beiden Barriereschichtrandseiten 19, 20 vollständig in radialer Richtung. Zu erkennen ist ferner, dass sich die Umfangserstreckung des Verbindungsbereichs ausgehend von einem von dem Übergangsabschnitt 23 gebildeten äußersten Bereich in radialer Richtung bis zu einer radial weiter innen gelegenen Radialposition 28 abnimmt. Anders ausgedrückt, nimmt die Umfangserstreckung des Verbindungsbereichs 24 ausgehend von der innengelegenen Radialposition 28, die etwa im Anlagebereich der ersten Randseite 5 an der zweiten Randseite 6 (vgl. Fig. 2a) vor dem Verschweißen lokalisiert ist in radialer Richtung nach außen weiter zu, ebenso wie in radialer Richtung nach innen, ausgehend von der (inneren) Position 28. Die Formgebung bzw. Kontur des radial außerhalb der inneren Position 28 gelegenen Verbindungsbereichsabschnitts wird im Wesentlichen bestimmt von der Form und Größe des äußeren Längsspaltes vor der Verschweißung und der radial innen an die Position 28 angrenzende Verbindungsbereichsabschnitt von dem inneren Längsspalt 14, welcher im Wesentlichen aufgefüllt wurde beim Verschweißen vom Material des die Innenumfangsfläche überragenden Zipfels.

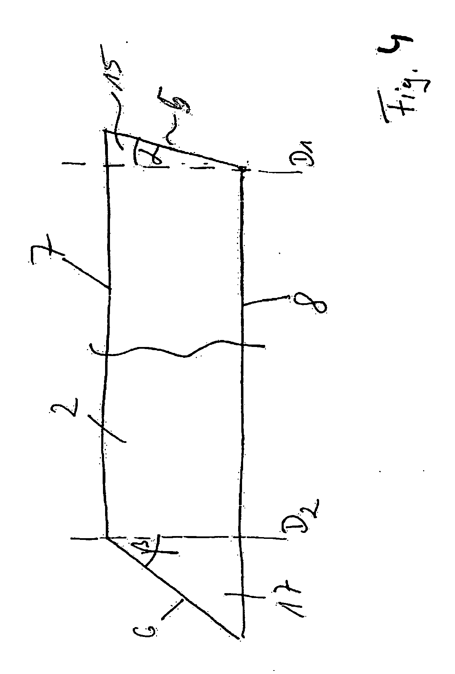

Zur Verdeutlichung der Lage des ersten und des zweiten Winkels α, β bei abgerolltem Foliensubstrat wird auf Fig. 4 verwiesen. Dort ist allgemein ein abgerolltes, seitlich angeschnittenes Foliensubstrat 2 dargestellt, wobei es sich um ein einschichtiges, mehrschichtiges, symmetrisches oder asymmetrisches Folienmaterial handeln kann. Eingezeichnet sind die beiden Dickenerstreckungsrichtungen D₁ und D₂, die bei abgewickeltem Foliensubstrat parallel angeordnet sind. Zu erkennen sind die beiden Randseiten 5, 6 die unter unterschiedlichen Winkeln, α, β zu jeweiligen Dickenerstreckungslinie D₁, D₂ verlaufen. Aus Fig. 4 ergibt sich, dass die erste Randseite 5 mit der späteren Innenumfangsfläche 8 im abgewickelten Zustand einen Winkel 90° + α einschließt und die zweite Randseite 6 zu der zur Innenumfangsfläche 8 parallelen Außenumfangsfläche einen davon unterschiedlichen Winkel 90°+ β. Die unterschiedlichen Winkel α, β können generell erhalten werden durch Anschneiden des Foliensubstrates mit Hilfe zweier im Bezug auf die Flächenerstreckungsfoliensubstrates unterschiedlich angewinkelten Schneiden (Messer), wobei dieser Schneidschnitt beispielsweise inline vor dem Positionierschnitt zur Umformung des Foliensubstrates zu der Rohrform realisiert wird, oder außerhalb der Vorrichtung in einem vorgelagerten Verfahrensschritt.

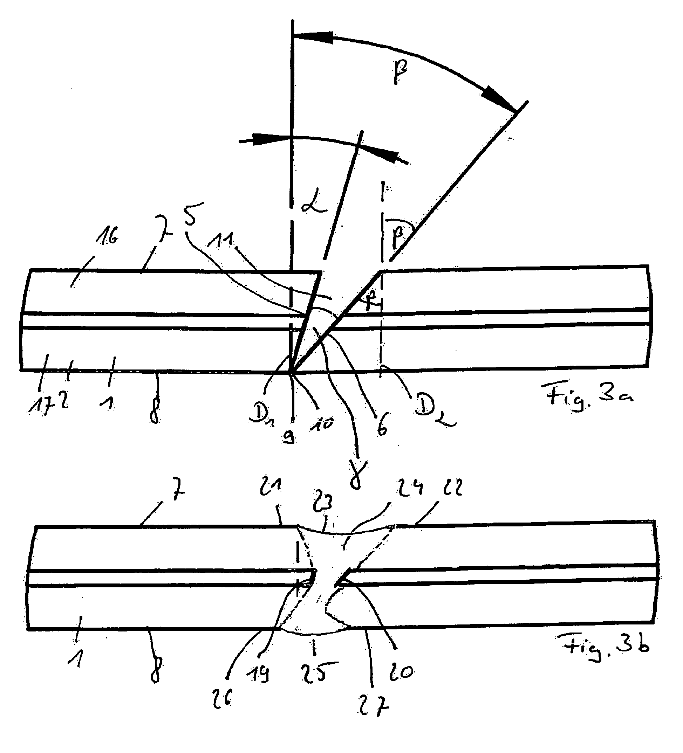

Im Folgenden wird anhand der Fig. 3a ein weiteres Ausführungsbeispiel erläutert, wobei zur Vermeidung von Wiederholungen im Wesentlichen nur auf die Unterschiede zu dem Ausführungsbeispiel gemäß den Fig. 2a und 2b eingegangen wird. Im Hinblick auf die Gemeinsamkeiten wird auf vorstehende Ausführungsbeispiele verwiesen.

Im Unterschied zu dem vorstehenden Ausführungsbeispiel ist bei dem Ausführungsbeispiel gemäß in Fig. 3a und 3b kein Radialversatz (Höhenversatz) realisiert - dies wird dadurch erreicht, dass die beiden radial inneren Kanten 9, 10 auf demselben Radius angeordnet werden.

Hierdurch entfällt die Überlappung des Innenumfangs in Umfangsrichtung, d.h. es existiert im Wesentlichen kein innerer Längsspalt sondern ausschließlich ein äußerer nach außen offener Längsspalt 11, der sich von der Außenumfangsfläche bis zur Innenumfangsfläche des Rohrkörpers 1 erstreckt.

In dem gezeigten Ausführungsbeispiel schließt die den äußeren Längsspalt 11 in der Zeichnungsebene links begrenzende erste Randseite 5 mit der ersten Dickenerstreckungsrichtung D₁ einen Winkel α von 15°ein. Die zweite Randseite 6 schließt mit der zweiten Dickenerstreckungsrichtung D₂ einen Winkel β von 30° ein. Die Winkeldifferenz beträgt also 15°. Es resultiert der äußere Längsspalt 11 mit einem Öffnungswinkel γ von 15°.

Anstelle der gezeigten mehrschichtigen Folie kann auch eine einschichtige Folie Anwendung finden, die in diesem Fall vollständig aus verschweißbarem Kunststoffmaterial besteht.

Der äußere Längsspalt 11 wird beim Verschweißen aufgefüllt mit Kunststoffschichtmaterial der mindestens einen Kunststoffschicht, hier beider Kunststoffschichten 16, 17 unter Ausbildung des Verbindungsbereichs 24, der sich von der Außenumfangsfläche 7 bis zur Innenumfangsfläche 8 erstreckt. Der Verbindungsbereich 24 überdeckt beide Barriereschichtrandseiten 19, 20 in radialer Richtung.

Der beim Schweißen resultierende äußere Übergangsabschnitt 23 zwischen den Außenumfangsflächenabschnitten 21, 22 ist leicht nach radial innen konkav gekrümmt ausgebildet, wohingegen sich beim radial inneren Übergangsabschnitt 25 eine konvexere Wölbung ergibt, welche die beiden Innenumfangsflächenabschnitte 26, 27, die sich auf einem gemeinsamen Radius befinden miteinander verbindet.

### Bezugszeichenliste

- 1: Rohrkörper
- 2: Foliensubstrat
- 3: verschweißbare Kunststoffschicht
- 4: (Detail-) Bereich
- 5: erste Randseite
- 6: zweite Randseite
- 7: Außenumfangsfläche
- 8: Innenumfangsfläche
- 9: erste radial innerste Kante
- 10: zweite radial innerste Kante
- 11: äußerer Längsspalt
- 12: radial innerer Bereich
- 13: erster Innenumfangsflächenrandabschnitt
- 14: innerer Längsspalt
- 15: zweiter Innenumfangsflächenrandabschnitt
- 16: äußere Kunststoffschicht
- 17: innere Kunststoffschicht
- 18: Barriereschicht
- 19: erste Barriereschichtrandseite
- 20: zweite Barriereschichtrandseite
- 21: erster Außenumfangsflächenabschnitt
- 22: zweiter Außenumfangsflächenabschnitt
- 23: äußerer Übergangsabschnitt
- 24: Verbindungsbereich
- 25: innerer Übergangsabschnitt
- 26: erster Innenumfangsflächenabschnitt
- 27: zweiter Innenumfangsflächenabschnitt
- 28: innen gelegene Radialposition
- 29: zweite radial äußere Kante
- 30: erste radial äußere Kante
- D₁: erste Dickenerstreckungslinie an der Umfangsposition der ersten innersten Kante
- D₂: zweite Dickenerstreckungslinie an der Umfangsposition der zweiten äußersten Kante

- a: Umfangsversatzmaß bzw. Überlappungsmaß
- b: Radialversatz/Radialseitenmittenversatz

- α: erster Winkel
- β: zweiter Winkel
- γ: Öffnungswinkel

## Patentansprüche

1. Verfahren zum Herstellen von eine Innenumfangsfläche (8) sowie eine Außenumfangsfläche (7) aufweisenden Rohrkörpern (1) für Verpackungstuben aus einem bandförmigen Foliensubstrat (2), welches mindestens eine verschweissbare Kunststoffschicht (3) aufweist oder aus dieser besteht und welches eine sich in Längsrichtung des Foliensubstrates (2) erstreckende erste Randseite (5) und eine um die Breite des Foliensubstrates (2) von der ersten Randseite (5) beabstandete zweite Randseite (6) umfasst, wobei die erste Randseite (5) zu einer ersten Dickenerstreckungsrichtung an einer ersten radial innersten Kante (9) der ersten Randseite (5) unter einem ersten Winkel (α) verläuft und die zweite Randseite (6) zu einer zweiten Dickenerstreckungsrichtung an einer zweiten radial äußersten Kante der zweiten Randseite (6) unter einem zweiten Winkel (β) verläuft und wobei die erste und die zweite Randseite (6) aneinander gegenüberliegend angeordnet und unter Wärmeeinwirkung verbunden werden,
**dadurch gekennzeichnet,**
**dass** der erste Winkel (α) und der zweite Winkel (β) unterschiedlich groß sind, derart, dass der erste Winkel (α) um eine Winkeldifferenz zwischen 3° und 70° kleiner gewählt wird als der zweite Winkel (β), und dass die Randseiten (5, 6) derart angeordnet werden, dass von der ersten und der zweiten Randseite (5, 6) ein nach außen offener Längsspalt (11) begrenzt wird.

2. Verfahren nach Anspruch 1,
**dadurch gekennzeichnet,**
**dass** der erste Winkel (α) aus einem Winkelbereich zwischen 1° und 77°, vorzugsweise zwischen 5° und 70°, noch weiter bevorzugt zwischen 10° und 60° und/oder der zweite Winkel (β) aus einem Winkelbereich zwischen 4° und 80°, vorzugsweise zwischen 5° und 70°, noch weiter bevorzugt zwischen 10° und 60° gewählt sind/ist.

3. Verfahren nach einem der Ansprüche 1 oder 2,
**dadurch gekennzeichnet,**
**dass** der erste Winkel (α) um eine Winkeldifferenz aus einem Winkelbereich zwischen 3° und 30°, noch weiter bevorzugt aus einem Winkelbereich zwischen 3° und 7° kleiner gewählt wird als der zweite Winkel (β).

4. Verfahren nach einem der vorhergehenden Ansprüche,
**dadurch gekennzeichnet,**
**dass** der äußere Längsspalt (11) beim Verschweißen mit Kunststoffmaterial der mindestens einen Kunststoffschicht (16, 17), zumindest teilweise, vorzugsweise vollständig, aufgefüllt wird.

5. Verfahren nach einem der vorhergehenden Ansprüche,
**dadurch gekennzeichnet,**
**dass** eine erste Dickenmitte der ersten Randseite (5) in radialer Richtung versetzt angeordnet wird zu einer zweiten Dickenmitte der zweiten Randseite (6), vorzugsweise derart, dass die erste Dickenmitte um eine Strecke aus einem Wertebereich zwischen 10µm und 300 µm, vorzugsweise zwischen 20µm und 250µm, in radialer Richtung weiter außen angeordnet ist als die zweite Dickenmitte.

6. Verfahren nach einem der vorhergehenden Ansprüche,
**dadurch gekennzeichnet,**
**dass** die erste und die zweite Randseite (5, 6) derart relativ zueinander angeordnet werden, dass die zweite Randseite (6) die Innenumfangsfläche (8) des Foliensubstrates (2) in Umfangsrichtung überragt, vorzugsweise um eine in Umfangrichtung gemessene Strecke aus einem Wertebereich zwischen 0,01mm und 1,50mm, vorzugsweise zwischen 0,05mm und 1,00mm, so dass zwischen der zweiten Randseite (6) und der Innenumfangsfläche (8) ein innerer Längsspalt (14) gebildet wird.

7. Verfahren nach Anspruch 6,
**dadurch gekennzeichnet,**
**dass** der innere Längsspalt (14), zumindest teilweise, vorzugsweise vollständig, beim Verschweißen mit Kunststoffmaterial, insbesondere des die Innenumfangsfläche (8) überragenden Teils (Zipfels) des Follensubstrates (2), gefüllt wird.

8. Verpackungstube, vorzugsweise hergestellt nach einem Verfahren gemäß einem der vorhergehenden Ansprüche, mit einem einen Auslass umfassenden Tubenkopf, der an einem, aus einem mindestens eine verschweißbare Kunststoffschicht (3) aufweisenden oder aus dieser bestehenden Foliensubstrat (2) durch Verschweißen hergestellten, eine Außenumfangsfläche (7) und eine Innenumfangsfläche (8) aufweisenden Rohrkörper (1) festgelegt ist, wobei ein sich in radialer Richtung von der Außenumfangsfläche (7) bis zur Innenumfangsfläche (8) erstreckender Verbindungsbereich (24) aus geschmolzenem und wieder erstarrtem Kunststoffmaterial der mindestens einen Kunststoffschicht (16, 17) vorgesehen ist,
**dadurch gekennzeichnet,**
**dass** die Umfangserstreckung des Verbindungsbereichs (24) ausgehend von einem radial äußersten Bereich in radialer Richtung nach innen bis zu einer radial weiter innen gelegenen Radialposition (28) abnimmt, und dass die radial weiter innen gelegen Radialposition (28) mit Radialabstand zur Innenumfangsfläche (8) angeordnet ist, und dass die Umfangserstreckung des Verbindungsbereichs (24) von der Radialposition (28) bis zur Innenumfangsfläche (8) zunimmt.

9. Verpackungstube nach einem der Anspruch 8,
**dadurch gekennzeichnet,**
**dass** ein sich in Längsrichtung sowie in Umfangsrichtung des Tubenrohres erstreckender erster Innenumfangsflächenabschnitt (26) und ein zweiter sich in Längsrichtung sowie in Umfangsrichtung des Tubenrohres erstreckender Innenumfangsflächenabschnitt (27) senkrecht zur Umfangserstreckung in radialer Richtung höhenversetzt sind, und dass in Umfangsrichtung zwischen den höhenversetzten Innenumfangsflächenabschnitten (26, 27) ein innerer Übergangsabschnitt (25) aus geschmolzenem und wieder erkaltetem Kunststoffschichtmaterial als stufenloser Übergang in Umfangsrichtung ausgebildet ist.

10. Verpackungstube nach einem der Ansprüche 8 oder 9,
**dadurch gekennzeichnet,**
**dass** das Foliensubstrat (2) mehrschichtig ist und mindestens eine, vorzugsweise sandwichartig zwischen mindestens zwei Kunststoffschichten (16, 17) angeordnete, Barriereschicht (18) gegen Feuchtigkeit und/oder Sauerstoff umfasst, und dass eine erste Barriereschichtrandseite (19) und eine zweite Barriereschichtrandseite (20) der Barriereschicht (18) vollständig von geschmolzenem und wieder erstarrtem Kunststoff des Verbindungsbereichs (24) in radialer Richtung überdeckt sind.

## Claims

1. A method for manufacturing a tubular body (1) for packaging tubes having an inner circumferential surface (8) and an outer circumferential surface (7) formed from a strip-shaped film substrate (2) which has or consists of at least one weldable plastic layer (3) and which comprises a first edge face (5) extending in the longitudinal direction of the film substrate (2) and a second edge face (6) spaced apart from the first edge face (5) by the width of the film substrate (2), wherein the first edge face (5) is positioned at a first angle (α) relative to a first direction in which the thickness extends at a first radially innermost border (9) of the first edge face (5), and the second edge face (6) is at a second angle (β) relative to a second direction in which the thickness extends at a second radially outermost border of the second edge face (6), and wherein the first and the second edge faces (6) are mutually opposed to each other and joined together by the action of heat,
**characterized in that**
the first angle (α) and the second angle (β) are different, **in that** the first angle (α) is selected so as to be smaller than the second angle (β) by an angular difference in the range 3° to 70°, and **in that** the edge faces (5, 6) are disposed in a manner such that an outwardly open longitudinal gap (11) is delimited by the first and the second edge faces (5, 6).

2. The method as claimed in claim 1,
**characterized in that**
the first angle (α) is selected from an angular range between 1° and 77°, preferably between 5° and 70°, still more preferably between 10° and 60° and/or the second angle (β) is selected from an angular range between 4° and 80°, preferably between 5° and 70°, still more preferably between 10° and 60°.

3. The method as claimed in claim 1 or 2,
**characterized in that**
the first angle (α) is selected so as to be smaller than the second angle (β) by an angular difference within an angular range between 3° and 30°, still more preferably within an angular range between 3° and 7°.

4. The method as claimed in one of the preceding claims,
**characterized in that**
upon welding, the outer longitudinal gap (11) is at least partially, preferably completely filled with plastic material from the at least one plastic layer (16, 17).

5. The method as claimed in one of the preceding claims,
**characterized in that**
a first centre of thickness of the first edge face (5) is offset in a radial direction relative to a second centre of thickness of the second edge face (6), preferably in a manner such that the first centre of thickness is disposed radially further outwardly than the second centre of thickness by a distance in the range 10 µm to 300 µm, preferably in the range 20 µm to 250 µm.

6. The method as claimed in one of the preceding claims,
**characterized in that**
the first and the second edge face (5, 6) are disposed relative to each other in a manner such that the second edge face (6) overlaps the inner circumferential surface (8) of the film substrate (2) in the circumferential direction, preferably by a distance measured in the circumferential direction in the range 0.01 mm to 1.50 mm, preferably in the range 0.05 mm to 1.00 mm, such that an inner longitudinal gap (14) is formed between the second edge face (6) and the inner circumferential surface (8).

7. The method as claimed in claim 6,
**characterized in that**
the inner longitudinal gap (14) is at least partially, preferably completely filled with plastic material during welding, in particular from the portion (tip) of the film substrate (2) which projects over the inner circumferential surface (8).

8. A packaging tube, preferably manufactured in accordance with a method as claimed in one of the preceding claims, with a tube head comprising an outlet which is attached to a tubular body (1) which is manufactured, by welding, from a film substrate (2) which has or consists of at least one weldable plastic layer (3), and has an outer circumferential surface (7) and an inner circumferential surface (8), wherein a connecting region (24) comprised of fused and resolidified plastic material from the at least one plastic layer (16, 17) and extending in a radial direction from the outer circumferential surface (7) up to the inner circumferential surface (8) is provided,
**characterized in that**
the circumferential extension of the connecting region (24) tapers inwardly in a radial direction proceeding from a radially outermost region to a radial position (28) lying radially further inwardly, and **in that** the radial position (28) lying radially further inwardly is radially spaced apart from the inner circumferential surface (8), and **in that** the circumferential extension of the connecting region (24) increases from the radial position (28) to the inner circumferential surface (8).

9. The packaging tube as claimed in claim 8,
**characterized in that**
a first inner circumferential surface section (26) extending in the longitudinal direction as well as in the circumferential direction of the tubular pipe and a second inner circumferential surface section (27) extending in the longitudinal direction as well as in the circumferential direction of the tubular pipe are offset in height perpendicular to the circumferential extension in a radial direction, and **in that** an inner transitional section (25) consisting of fused and re-cooled plastic layer material is formed in the circumferential direction between the height-offset inner circumferential surface sections (26, 27) as a seamless transition in the circumferential direction.

10. The packaging tube as claimed in claim 8 or 9,
**characterized in that**
the film substrate (2) is multi-layered, and comprises at least one barrier layer (18) against moisture and/or oxygen which is preferably sandwiched between at least two plastic layers (16, 17), and **in that** a first barrier layer edge face (19) and second barrier layer edge face (20) of the barrier layer (18) are completely covered in a radial direction with fused and resolidified plastic of the connecting region (24).

## Revendications

1. Procédé de fabrication de corps tubulaires (1) présentant une surface périphérique intérieure (8) ainsi qu'une surface périphérique extérieure (7) pour des tubes d'emballage en substrat en film en forme de bande (2), qui présente au moins une couche de plastique soudable (3) ou qui se compose de celle-ci et qui comprend une première face de bord (5) s'étendant dans la direction longitudinale du substrat en film (2) et une deuxième face de bord (6) espacée de la première face de bord (5) de la largeur du substrat en film (2), la première face de bord (5) s'étendant suivant un premier angle (α) par rapport à une première direction d'étendue d'épaisseur au niveau d'une première arête radialement la plus interne (9) de la première face de bord (5) et la deuxième face de bord (6) s'étendant suivant un deuxième angle (β) par rapport à une deuxième direction d'étendue d'épaisseur au niveau d'une deuxième arête radialement la plus externe de la deuxième face de bord (6) et la première et la deuxième face de bord (6) étant disposées en face l'une de l'autre et étant connectées par application de chaleur,
**caractérisé en ce que**
le premier angle (α) et le deuxième angle (p) sont différents de telle sorte que le premier angle (α) soit choisi inférieur au deuxième angle (β) d'une différence angulaire comprise entre 3° et 70° et **en ce que** les faces de bord (5, 6) sont disposées de telle sorte qu'une fente longitudinale ouverte vers l'extérieur (11) soit limitée par la première et la deuxième face de bord (5, 6).

2. Procédé selon la revendication 1,
**caractérisé en ce que**
le premier angle (α) est choisi dans une plage angulaire comprise entre 1° et 77°, de préférence entre 5° et 70°, encore plus préférablement entre 10° et 60° et/ou le deuxième angle (β) est choisi dans une plage angulaire comprise entre 4° et 80°, de préférence entre 5° et 70°, encore plus préférablement entre 10° et 60°.

3. Procédé selon l'une quelconque des revendications 1 ou 2,
**caractérisé en ce que**
le premier angle (α) est choisi inférieur au deuxième angle (β) d'une différence angulaire dans une plage angulaire comprise entre 3° et 30°, encore plus préférablement dans une plage angulaire comprise entre 3° et 7°.

4. Procédé selon l'une quelconque des revendications précédentes,
**caractérisé en ce que**
la fente longitudinale extérieure (11), lors du soudage avec la matière plastique de l'au moins une couche de plastique (16, 17), est remplie au moins en partie, de préférence complètement.

5. Procédé selon l'une quelconque des revendications précédentes,
**caractérisé en ce**
**qu'**un premier milieu de l'épaisseur de la première face de bord (5) est disposée de manière décalée dans la direction radiale par rapport à un deuxième milieu de l'épaisseur de la deuxième face de bord (6), de préférence de telle sorte que le premier milieu de l'épaisseur soit disposé dans la direction radiale plus vers l'extérieur que le deuxième milieu de l'épaisseur, d'une distance dans une plage de valeurs comprise entre 10 µm et 300 µm, de préférence entre 20 µm et 250 µm.

6. Procédé selon l'une quelconque des revendications précédentes,
**caractérisé en ce que**
la première et la deuxième face de bord (5, 6) sont disposées l'une par rapport à l'autre de telle sorte que la deuxième face de bord (6) dépasse de la surface périphérique intérieure (8) du substrat en film (2) dans la direction périphérique, de préférence d'une distance mesurée dans la direction périphérique dans une plage de valeurs comprise entre 0,01 mm et 1,50 mm, de préférence entre 0,05 mm et 1,00 mm, de telle sorte qu'entre la deuxième face de bord (6) et la surface périphérique intérieure (8) soit formée une fente longitudinale intérieure (14).

7. Procédé selon la revendication 6,
**caractérisé en ce que**
la fente longitudinale intérieure (14) est remplie au moins en partie, de préférence complètement, lors du soudage avec la matière plastique, en particulier de la partie (bout) dépassant de la surface périphérique intérieure (8) du substrat en film (2).

8. Tube d'emballage, de préférence fabriqué selon un procédé selon l'une quelconque des revendications précédentes, comprenant une tête de tube comprenant une sortie qui est fixée à un corps tubulaire (1) présentant une surface périphérique extérieure (7) et une surface périphérique intérieure (8), fabriqué par soudage à partir d'un substrat en film (2) présentant au moins une couche de plastique soudable (3) ou se composant de celle-ci, une région de connexion (24) en matière plastique fondue et à nouveau durcie de l'au moins une couche de plastique (16, 17), s'étendant dans la direction radiale de la surface périphérique extérieure (7) jusqu'à la surface périphérique intérieure (8), étant prévue,
**caractérisé en ce que**
l'étendue périphérique de la région de connexion (24) diminue à partir d'une région radialement la plus extérieure dans la direction radiale vers l'intérieur jusqu'à une position radiale située radialement davantage vers l'intérieur (28), et **en ce que** la position radiale située radialement davantage vers l'intérieur (28) est disposée à une distance radiale de la surface périphérique intérieure (8) et **en ce que** l'étendue périphérique de la région de connexion (24) augmente depuis la position radiale (28) jusqu'à la surface périphérique intérieure (8).

9. Tube d'emballage selon la revendication 8,
**caractérisé en ce**
**qu'**une première portion de surface périphérique intérieure (26) s'étendant dans la direction longitudinale ainsi que dans la direction périphérique du tube et une deuxième portion de surface périphérique intérieure (27) s'étendant dans la direction longitudinale et dans la direction périphérique du tube sont décalées en hauteur perpendiculairement à l'étendue périphérique dans la direction radiale, et en ce que dans la direction périphérique entre les portions de surface périphérique intérieure décalées en hauteur (26, 27) est réalisée une portion de transition intérieure (25) en matériau de couche plastique fondu et à nouveau refroidi en tant que transition continue dans la direction périphérique.

10. Tube d'emballage selon l'une quelconque des revendications 8 ou 9,
**caractérisé en ce que**
le substrat en film (2) est multicouche et comprend au moins une couche barrière (18) contre l'humidité et/ou l'oxygène, disposée de préférence en sandwich entre au moins deux couches de plastique (16, 17), et **en ce qu'**une première face de bord de couche barrière (19) et une deuxième face de bord de couche barrière (20) de la couche barrière (18) sont recouvertes dans la direction radiale complètement par le plastique de la région de connexion (24) fondu et à nouveau durci.
